# EUROPEAN PATENT SPECIFICATION

(11) **EP 3 731 506 B1**
(45) Date of publication and mention of the grant of the patent: **31.12.2025**
(21) Application number: 18892474.0
(22) Date of filing: 30.11.2018
(51) Int. Cl.: H04M 1/725, G06F 3/0484, G06F 3/0488, G06T 3/40, G06F 3/0482

(54) **IMAGE DISPLAY METHOD AND MOBILE TERMINAL**
BILDANZEIGEVERFAHREN UND MOBILES ENDGERÄT
PROCÉDÉ D'AFFICHAGE D'IMAGE ET TERMINAL MOBILE

(30) Priority: 22.12.2017 CN 201711406743
(43) Date of publication of application: 28.10.2020
(73) Proprietor: Vivo Mobile Communication Co., Ltd., Dongguan, Guangdong 523860 (CN)
(72) Inventor: YIN, Jianghua, Dongguan, Guangdong 523860 (CN)
(74) Representative: Conti, Marco
(86) International application number: PCT/CN2018/118484
(87) International publication number: WO 2019/120059

(56) References cited:
- EP-A2- 2 418 859
- CN-A- 101 957 824
- CN-A- 102 375 673
- CN-A- 104 808 911
- CN-A- 108 156 318
- US-A1- 2014 208 263
- US-B1- 9 529 509

## Description

### TECHNICAL FIELD

Embodiments of the present disclosure relate to the field of communication technologies, and in particular to an image display method and a mobile terminal.

### BACKGROUND

With the development of science and technology, mobile terminals in the related art often support image capture. For example, people may capture static images (pictures) or record dynamic images (videos) in many scenes to record the life. After people capture static images or record dynamic images, they often need to browse these images through a mobile terminal to review the life. However, regardless of whether images are static images or dynamic images, the mobile terminal displays multiple images in the form of thumbnail images. When a user needs to view a certain one image, the user clicks the one image to zoom in, and after zooming in, remaining images cannot be displayed. In this way, when the user needs to view other images, the user needs to return from a zoomed-in image to a thumbnail interface, and then select other image on the thumbnail interface to zoom in, thereby displaying the other image that the user needs to view. It can be seen that the procedure of viewing images in the related art is too cumbersome. US9529509B1 discloses a method for rendering an initial viewing field including a plurality of thumbnail images. EP2418859A2 discloses a method for controlling depth of an image. US2014208263A1 discloses a method of changing a display of an original image on a screen of a computerized mobile device.

### SUMMARY

The invention is set out in the appended set of claims. In a first aspect, one embodiment of the present disclosure provides an image display method, including:
displaying a thumbnail image interface including at least two thumbnail images; wherein the thumbnail image interface is a two-dimensional perspective image interface;
when a first touch operation on a first thumbnail image in the at least two thumbnail images is detected, displaying a three-dimensional perspective image interface including a zoomed-in image of the first thumbnail image and remaining thumbnail images of the at least two thumbnail images except for the first thumbnail image; where the three-dimensional perspective image interface is an image with a three-dimensional perspective effect displayed on a two-dimensional display screen or a three-dimensional perspective image interface displayed on a three-dimensional display screen;
wherein the zoomed-in image is a raised image in perspective on the three-dimensional perspective image interface and a raised height in perspective of each area of the raised image in perspective is consistent; positional relationship between the remaining thumbnail images of the at least two thumbnail images except for the first thumbnail image and the zoomed-in image on the three-dimensional perspective image interface is the same as positional relationship in the thumbnail image interface; the thumbnail image closer to the raised image in perspective, has a higher raised height in perspective on the three-dimensional perspective image interface.

In a second aspect, one embodiment of the present disclosure provides a mobile terminal, including:
a first thumbnail image interface display module configured to, display a thumbnail image interface including at least two thumbnail images; wherein the thumbnail image interface is a two-dimensional perspective image interface;
a three-dimensional perspective image interface display module configured to, when a first touch operation on a first thumbnail image in the at least two thumbnail images is detected, display a three-dimensional perspective image interface including a zoomed-in image of the first thumbnail image and remaining thumbnail images of the at least two thumbnail images except for the first thumbnail image; where the three-dimensional perspective image interface is an image with a three-dimensional perspective effect displayed on a two-dimensional display screen or a three-dimensional perspective image interface displayed on a three-dimensional display screen;
wherein the zoomed-in image is a raised image in perspective on the three-dimensional perspective image interface and a raised height in perspective of each area of the raised image in perspective is consistent; positional relationship between the remaining thumbnail images of the at least two thumbnail images except for the first thumbnail image and the zoomed-in image on the three-dimensional perspective image interface is the same as positional relationship in the thumbnail image interface; the thumbnail image closer to the raised image in perspective, has a higher raised height in perspective on the three-dimensional perspective image interface.

### BRIEF DESCRIPTION OF THE DRAWINGS

In order to illustrate technical solutions according to embodiments of the present disclosure more clearly, drawings to be used in the description of the embodiments will be described briefly hereinafter. Apparently, the drawings described hereinafter are only some embodiments of the present disclosure, and other drawings may be obtained by those skilled in the art according to those drawings without creative work.
FIG. 1 is a first flowchart of an image display method according to an embodiment of the present disclosure;
FIG. 2 is a first schematic diagram of an image display interface according to an embodiment of the present disclosure;
FIG. 3 is a second schematic diagram of an image display interface according to an embodiment of the present disclosure;
FIG. 4 is a second flowchart of an image display method according to an embodiment of the present disclosure;
FIG. 5 is a third schematic diagram of an image display interface according to an embodiment of the present disclosure;
FIG. 6 is a fourth schematic diagram of an image display interface according to an embodiment of the present disclosure;
FIG. 7 is a fifth schematic diagram of an image display interface according to an embodiment of the present disclosure;
FIG. 8 is a sixth schematic diagram of an image display interface according to an embodiment of the present disclosure;
FIG. 9 is a seventh schematic diagram of an image display interface according to an embodiment of the present disclosure;
FIG. 10 is an eighth schematic diagram of an image display interface according to an embodiment of the present disclosure;
FIG. 11 is a ninth schematic diagram of an image display interface according to an embodiment of the present disclosure;
FIG. 12 is a first schematic diagram of a mobile terminal according to an embodiment of the present disclosure;
FIG. 13 is a second schematic diagram of a mobile terminal according to an embodiment of the present disclosure;
FIG. 14 is a third schematic diagram of a mobile terminal according to an embodiment of the present disclosure;
FIG. 15 is a fourth schematic diagram of a mobile terminal according to an embodiment of the present disclosure;
FIG. 16 is a fifth schematic diagram of a mobile terminal according to an embodiment of the present disclosure; and
FIG. 17 is a sixth schematic diagram of a mobile terminal according to an embodiment of the present disclosure.

### DETAILED DESCRIPTION

The technical solutions of the present disclosure will be described hereinafter in a clear and complete manner in conjunction with the drawings and embodiments. Obviously, the following embodiments are merely a part of, rather than all of, the embodiments of the present disclosure, and based on these embodiments, a person skilled in the art may obtain the other embodiments, which also fall within the scope of the present disclosure.

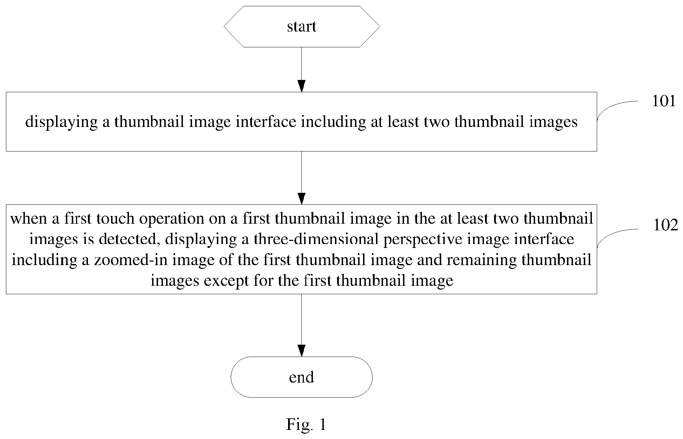

Referring to FIG. 1, FIG. 1 is a flowchart of an image display method according to an embodiment of the present disclosure. As shown in FIG. 1, the method includes the following steps.

Step 101: displaying a thumbnail image interface including at least two thumbnail images.

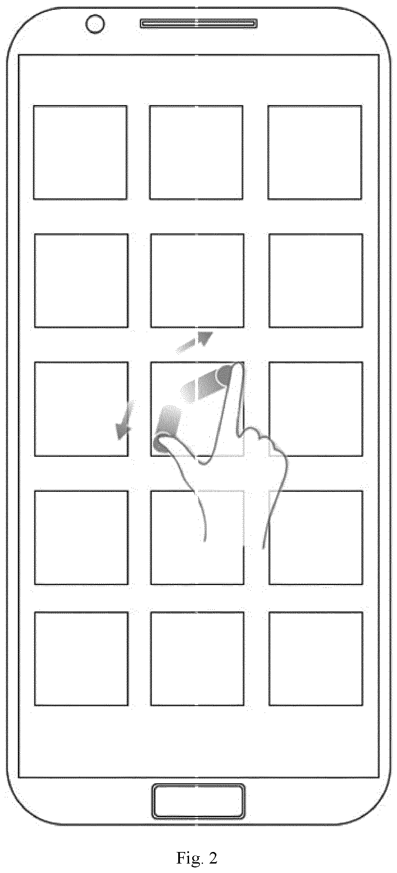

The thumbnail image interface is a two-dimensional perspective image interface. The image interface displays at least two thumbnail images. For example, as shown in FIG. 2, multiple thumbnail images are displayed on the thumbnail image interface.

Step 102: when a first touch operation on a first thumbnail image in the at least two thumbnail images is detected, displaying a three-dimensional perspective image interface including a zoomed-in image of the first thumbnail image and remaining thumbnail images except for the first thumbnail image.

The zoomed-in image is a raised image in perspective on the three-dimensional perspective image interface. Positional relationship between the remaining thumbnail images except for the first thumbnail image and the zoomed-in image on the three-dimensional perspective image interface is the same as the positional relationship in the thumbnail image interface. The thumbnail image closer to the raised image in perspective, has a higher raised height in perspective on the three-dimensional perspective image interface.

The first thumbnail image may be any one of thumbnail images on the thumbnail image interface displayed in the step 101. The first touch operation may be a two-finger zoom-in operation, a double-click operation or a long-press operation, etc, which is not limited in the embodiment of the present disclosure. FIG. 2 illustrates an example of a two-finger zoom-in operation.

Through the above steps, when the above first touch operation is detected, in response to the operation, the three-dimensional perspective image interface including the zoomed-in image of the first thumbnail image and the remaining thumbnail images is displayed.

The above three-dimensional perspective image interface may be an image with a three-dimensional perspective effect displayed on a two-dimensional display screen or a three-dimensional perspective image interface displayed on a three-dimensional display screen. Of course, the above three-dimensional perspective image interface may also be referred to as a stereoscopic view image interface because the three-dimensional perspective image interface includes image data in the z direction in addition to image data in the x direction and the y direction. That is, some image data of the three-dimensional perspective image interface involve raising. Since the three-dimensional perspective image interface is displayed, the display effect can be improved as compared to the two-dimensional perspective image interface.

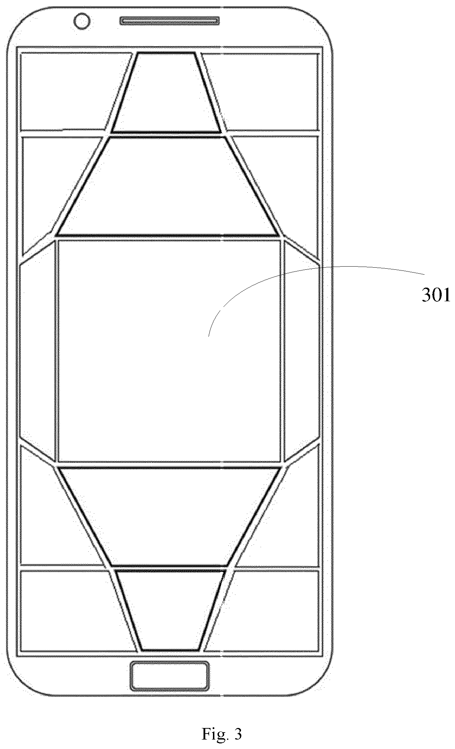

In addition, the raised image in perspective on the three-dimensional perspective image is an image with the highest raised height in perspective on the three-dimensional perspective image interface, for example, a raised image in perspective 301 shown in FIG. 3. As can be seen from FIG. 3, the raised image in perspective 301 has the highest raised height in perspective among all images on the three-dimensional perspective image interface. Further, the raised height in perspective of each area of the raised image in perspective is consistent. In this way, the zoomed-in image can be displayed in a large format ahead of the three-dimensional perspective image interface to enhance the display effect.

In addition, the positional relationship between the remaining thumbnail images and the zoomed-in image on the three-dimensional perspective image interface being the same as the positional relationship in the thumbnail image interface, may be understood as that positional relationship of various thumbnail images on the three-dimensional perspective image interface is consistent with the positional relationship of various thumbnail images on the thumbnail image interface. For example, as can be seen from FIG. 2 and FIG. 3, the positional relationship of nine images is consistent in FIG. 2 and FIG. 3, so that the user can quickly switch to other images.

Further, the thumbnail image closer to the raised image in perspective has a higher raised height in perspective on the three-dimensional perspective image interface. In this way, the remaining thumbnail images may be expanded around the zoomed-in image in a form similar to a waterfall in a rear of the three-dimension perspective image interface, thereby improving the display effect.

It should be noted that, in one embodiment of the present disclosure, the raised height in perspective may be a coordinate value of the z coordinate axis in a three-dimensional coordinate system of x, y, and z, where the z coordinate axis represents the front-rear vector of the three-dimensional perspective image. The larger is the coordinate value of the z coordinate axis, the larger the raised height in perspective. Thus, the thumbnail image closer to the raised image in perspective having a higher raised height in perspective on the three-dimensional perspective image interface, may be understood as that, the thumbnail image closer to the raised image in perspective has a larger coordinate value of the z coordinate axis in the three-dimensional coordinate system corresponding to the three-dimensional perspective image interface, i.e., closer to the front in perspective. The raised image in perspective may be an image with the largest coordinate value of the z coordinate axis in the three-dimensional perspective image interface, i.e., an image ahead of perspective.

In addition, it should be noted that, shapes of the thumbnail images from the thumbnail image interface may be adjusted in the three-dimensional perspective image interface, and the raised height in perspective of each area of each of remaining thumbnail images on the three-dimensional perspective image interface may be different. In any one of thumbnail images, the area closer to the raised image in perspective has a higher raised height in perspective; and vice versa, the lower, as shown in FIG. 3.

In addition, in one embodiment of the present disclosure, the image may be a static image such as a photo, or the image may be a dynamic image such as a video. When the image is a video, the raised image in perspective may be in a playing state, while the remaining images may be in a paused state. Or, all images may be in a playing state, but the mobile terminal only outputs audio of the raised image in perspective.

In one embodiment of the present disclosure, the above method may be applied to a mobile terminal, such as a mobile phone, a tablet personal computer, a laptop computer, a personal digital assistant (PDA), a mobile internet device (MID) or a wearable device.

In one embodiment of the present disclosure, a thumbnail image interface including at least two thumbnail images is displayed; when a first touch operation on a first thumbnail image in the at least two thumbnail images is detected, a three-dimensional perspective image interface including a zoomed-in image of the first thumbnail image and remaining thumbnail images except for the first thumbnail image are displayed. The zoomed-in image is the raised image in perspective on the three-dimensional perspective image interface. Positional relationship between the remaining thumbnail images except for the first thumbnail image and the zoomed-in image on the three-dimensional perspective image interface is the same as the positional relationship in the thumbnail image interface. The thumbnail image closer to the raised image in perspective, has a higher raised height in perspective on the three-dimensional perspective image interface. In this way, remaining thumbnail images can be displayed at the same time when displaying a zoomed-in image, so that a user can directly switch to a zoomed-in image of one of the remaining thumbnail images through these displayed thumbnail images, which is simple in operation.

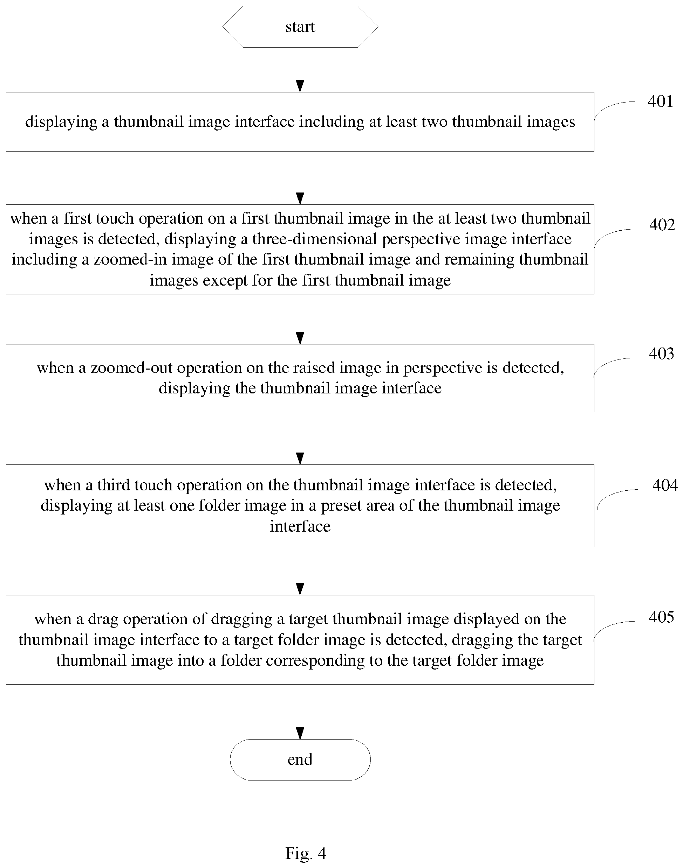

Referring to FIG. 4, FIG. 4 is a flowchart of an image display method according to an embodiment of the present disclosure. The main difference between this embodiment and the embodiment shown in FIG. 1 includes newly added steps of: when a zoomed-out operation on the raised image in perspective is detected, displaying the thumbnail image interface; when a third touch operation on the thumbnail image interface is detected, displaying at least one folder image in a preset area of the thumbnail image interface; when a drag operation of dragging a target thumbnail image displayed on the thumbnail image interface to a target folder image is detected, dragging the target thumbnail image into a folder corresponding to the target folder image. As shown in FIG. 4, the method includes the following steps.

Step 401: displaying a thumbnail image interface including at least two thumbnail images.

The thumbnail image interface may be a two-dimensional perspective image interface. The image interface displays at least two thumbnail images.

Step 402: when a first touch operation on a first thumbnail image in the at least two thumbnail images is detected, displaying a three-dimensional perspective image interface including a zoomed-in image of the first thumbnail image and remaining thumbnail images except for the first thumbnail image.

The zoomed-in image is a raised image in perspective on the three-dimensional perspective image interface. Positional relationship between the remaining thumbnail images except for the first thumbnail image and the zoomed-in image on the three-dimensional perspective image interface is the same as the positional relationship in the thumbnail image interface. The thumbnail image closer to the raised image in perspective, has a higher raised height in perspective on the three-dimensional perspective image interface.

The three-dimensional perspective image interface may refer to the corresponding description of the embodiment shown in FIG. 1, and details are not repeated herein.

Optionally, in the three-dimensional perspective image interface, the size of each of the remaining thumbnail images except for the first thumbnail image is gradually decreased in a direction away from the raised image in perspective, and a raised height in perspective of each of the remaining thumbnail images except for the first thumbnail image is gradually decreased in the direction away from the raised image in perspective.

In this embodiment, the size of each of the remaining thumbnail images is gradually decreased in the direction away from the raised image in perspective, and the raised height in perspective of each of the remaining thumbnail images is gradually decreased in the direction away from the raised image in perspective, as shown in FIG. 3, this can improve the display effect of the image and provide better three-dimensional perspective effect.

Optionally, after the step of displaying a three-dimensional perspective image interface including a zoomed-in image of the first thumbnail image and remaining thumbnail images except for the first thumbnail image, the method further includes: when a first direction sliding operation on the raised image in perspective is detected, updating the raised image in perspective on the three-dimensional perspective image interface and remaining thumbnail images except for the first thumbnail image, according to a sliding direction of the first direction sliding operation; or, when a second direction sliding operation on the raised image in perspective is detected, adjusting the three-dimensional perspective image interface by taking a position of an adjacent thumbnail image of the zoomed-in image as a reference. The raised image in perspective on the adjusted three-dimensional perspective image interface is a zoomed-in image of the adjacent thumbnail image.

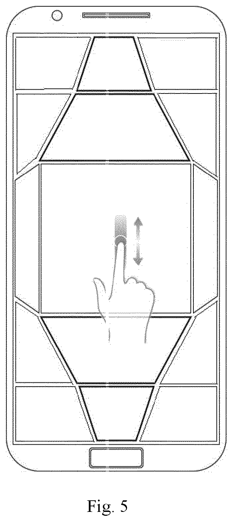

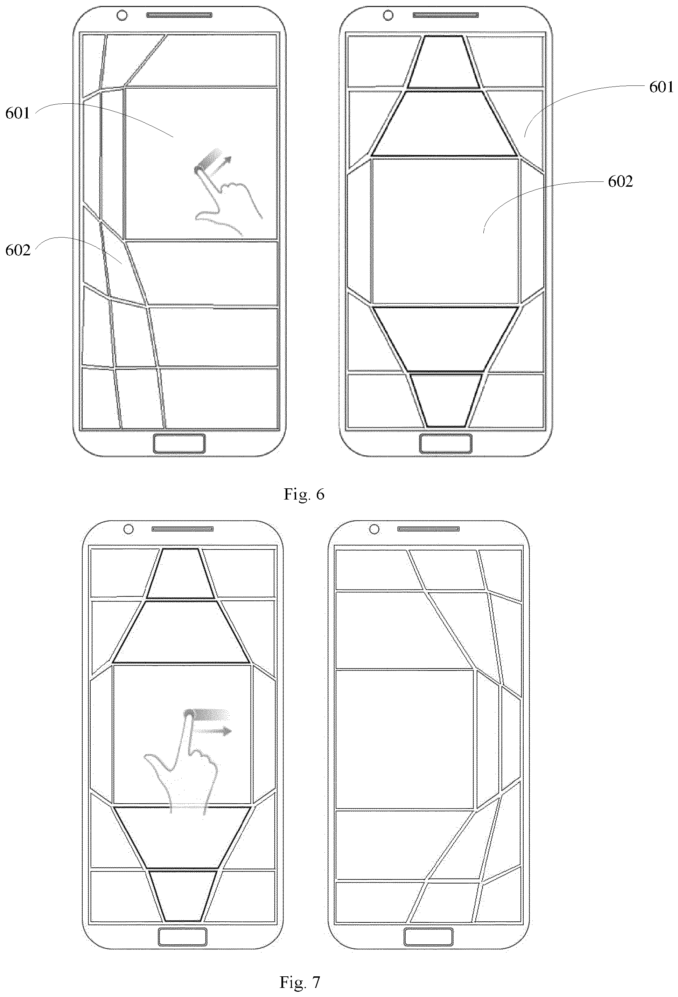

The above first direction sliding operation may be a sliding direction of updating images in a display interface supported by the mobile terminal, for example, up-down direction. In addition, in this embodiment, when updating display content of the three-dimensional perspective image interface, shapes in three-dimensional perspective in the three-dimensional perspective image interface may remain unchanged. For example, as shown in FIG. 5, after the display content of the three-dimensional perspective image interface is updated, the three-dimensional perspective image interface also maintains an intermediate image as the raised image in perspective, and only the content of the raised image in perspective is changed to a zoomed-in image of another thumbnail image, and the remaining thumbnail images are updated accordingly. Or, the first direction sliding operation may also be an oblique sliding direction, for example, sliding to the upper right, sliding to the lower right, sliding to the upper left, or sliding to the lower left. Different raised images in perspective can be updated by sliding in different directions. For example, as shown in the left drawing of FIG. 6, the current raised image in perspective is a zoomed-in image 601; when an operation of sliding to the upper right on the current raised image in perspective is detected, the mobile terminal responds to the operation to display a three-dimensional perspective image interface shown in the right drawing of FIG. 6. At this point, the raised image in perspective on the three-dimensional perspective image interface is a zoomed-in image 602. The zoomed-in image 602 is a zoomed-in image of the left-lower corner thumbnail image 602 adjacent to the zoomed-in image 601, and then the zoomed-in image 601 is changed into a thumbnail image.

In this embodiment, in the process of updating the images, the shapes in perspective in the three-dimensional perspective image interface are always unchanged, thereby improving display effect and interest.

In addition, the second direction sliding operation may be performed in a direction perpendicular to the first direction. For example, the first direction is an up-down direction, and the second direction is a left-right direction. The adjacent thumbnail image of the zoomed-in image may be corresponding to the second direction sliding operation. For example, when the second direction sliding operation is leftward sliding, the adjacent thumbnail image may be a thumbnail image adjacent a right side of the zoomed-in image; when the second direction sliding operation is rightward sliding, the adjacent thumbnail image may be a thumbnail image adjacent a left side of the zoomed-in image. For example, taking the second direction sliding operation being rightward sliding as an example, as shown in FIG. 7, the left drawing in FIG. 7 indicates that a rightward sliding operation is received. The adjusting the three-dimensional perspective image interface by taking a position of an adjacent thumbnail image of the zoomed-in image as a reference, may include: zooming in the adjacent thumbnail image at the position of the adjacent thumbnail image to obtain a zoomed-in image; adjusting a raised height in perspective of the zoomed-in image of the adjacent thumbnail image to a preset maximum raised height in perspective, thereby forming a new raised image in perspective. The remaining thumbnail images are correspondingly adjusted according to the position of the new raised image in perspective. For example, in response to reception of a rightward sliding operation as shown in the left drawing in FIG. 7, the mobile terminal displays a three-dimensional perspective image interface as shown in the right drawing in FIG. 7.

In this embodiment, by adjusting the three-dimensional perspective image interface by taking the position of the adjacent thumbnail image of the zoomed-in image as a reference, the zoomed-in image can be flexibly switched to further simplify the operation process.

Optionally, after the step of displaying a three-dimensional perspective image interface including a zoomed-in image of the first thumbnail image and remaining thumbnail images except for the first thumbnail image, the method further includes: when a second touch operation on a second thumbnail image rather than the raised image in perspective on the three-dimensional perspective image interface is detected, adjusting the three-dimensional perspective image interface by taking a position of the second thumbnail image as a reference. The raised image in perspective on the adjusted three-dimensional perspective image interface is a zoomed-in image of the second thumbnail image.

The above second touch operation may be a click operation or a long press operation, etc.

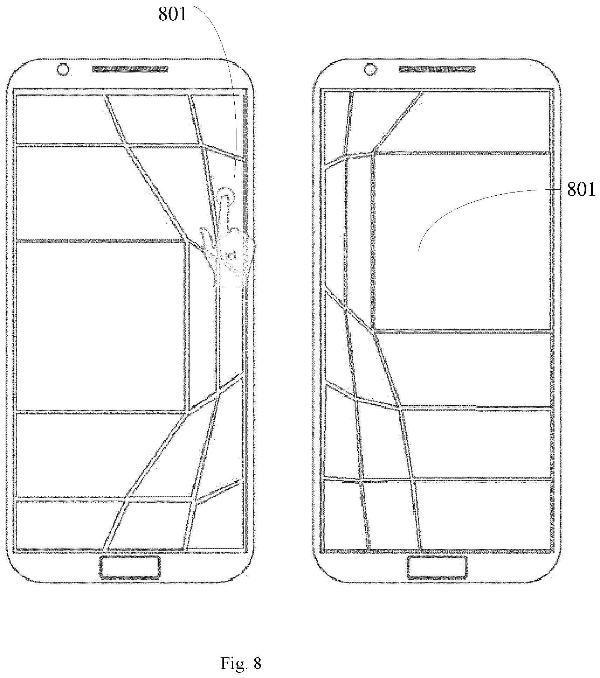

The adjusting the three-dimensional perspective image interface by taking a position of the second thumbnail image as a reference, may include: zooming in the second thumbnail image at the position of the second thumbnail image to obtain a zoomed-in image; adjusting a raised height in perspective of the zoomed-in image of the second thumbnail image to a preset maximum raised height in perspective, thereby forming a new raised image in perspective. The remaining thumbnail images are correspondingly adjusted according to the position of the new raised image in perspective. For example, as shown in the left drawing of FIG. 8, the user clicks on a second thumbnail image 801, and then the mobile terminal displays a three-dimensional perspective image interface as shown in the right drawing in FIG. 8. The raised image in perspective in the right drawing of FIG. 8 is a zoomed-in image of the second thumbnail image 801, and shapes of the remaining thumbnail images are correspondingly adjusted according to the zoomed-in image.

In this embodiment, the zoomed-in image can be quickly switched, thereby improving the speed of image switching. Further, it can ensure that the three-dimensional perspective image interface is always maintained at the three-dimensional perspective, thereby improving the display effect.

Step 403: when a zoomed-out operation on the raised image in perspective is detected, displaying the thumbnail image interface.

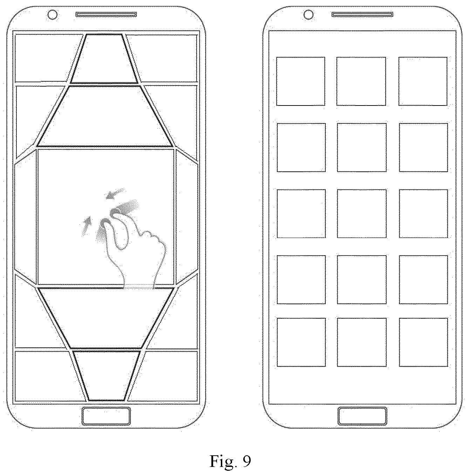

The above zoom-out operation may be a two-finger folding operation or a double-click operation, etc. For example, as shown in FIG. 9, when a two-finger folding operation is detected in the left drawing of FIG. 9, in response to this operation, the mobile terminal displays a thumbnail image interface shown in the right drawing of FIG. 9.

Step 404: when a third touch operation on the thumbnail image interface is detected, displaying at least one folder image in a preset area of the thumbnail image interface.

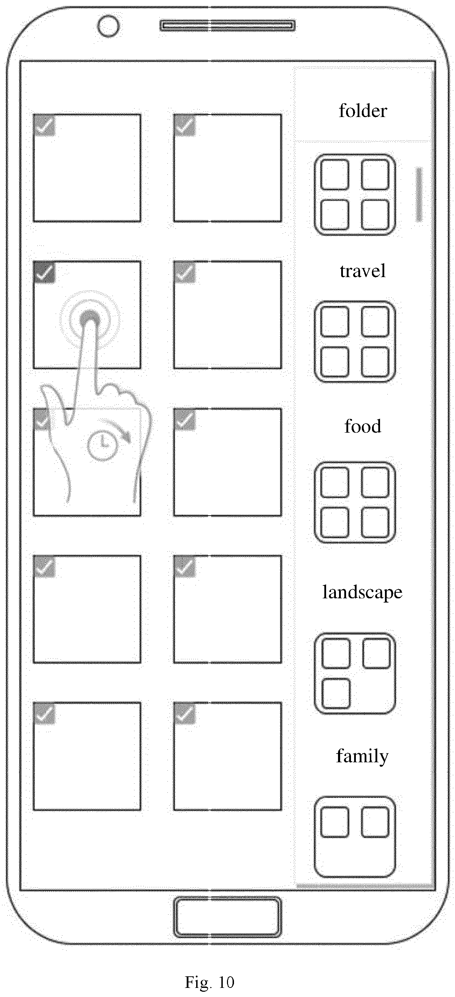

The third touch operation may be a long press operation or a repress operation. After the mobile terminal detects the third touch operation, in response to the operation, the mobile terminal displays at least one folder image in the preset area. The preset area may be a sidebar area. For example, as shown in FIG. 10, in response to the third touch operation, the mobile terminal displays an interface as shown in FIG. 10.

Of course, the above preset area may be other areas besides the sidebar area, for example, an area at a bottom or top of a screen, which is not limited in this embodiment of the present disclosure.

In addition, each folder image may be corresponding to one folder. The folder image may display a brief image of the corresponding folder.

Optionally, the displaying at least one folder image in a preset area, may include: displaying a perspective view with a boundary in the preset area, where at least one folder image is displayed in the perspective view. In this way, the display effect may be further improved, because thumbnail images can be viewed through the perspective view. Specifically, each folder image and boundary may be a floating image, that is, each folder image and the boundary are floated above the thumbnail image to enhance the display effect.

Step 405: when a drag operation of dragging a target thumbnail image displayed on the thumbnail image interface to a target folder image is detected, dragging the target thumbnail image into a folder corresponding to the target folder image.

The target thumbnail image may be a thumbnail image selected by the user. The target thumbnail image may be one or more thumbnail images and the above drag operation may be a drag operation detected on one thumbnail image, but the drag operation is valid for all target thumbnail images, so that multiple thumbnail images are dragged through one drag operation to improve image management effects.

Through the above steps, images in the thumbnail image interface can be directly moved, thereby simplifying process of moving images.

Optionally, when a drag operation of dragging a target thumbnail image displayed on the thumbnail image interface to a target folder image is detected, dragging the target thumbnail image into a folder corresponding to the target folder image, may include: when the drag operation of dragging the target thumbnail image displayed on the thumbnail image interface to the target folder image is detected, adjusting the target folder image to a zoomed-in three-dimensional perspective image, and zooming in the boundary corresponding to the target folder image in the preset area, and dragging the target thumbnail image into the folder corresponding to the target folder image.

The above adjusting the target folder image to a zoomed-in three-dimensional perspective image, may include: adjusting a raised height in perspective of the target folder image to a preset maximum raised height in perspective, thereby enabling the target folder image to be ahead of the interface while other un-triggered folder images are in the rear of the interface. In addition, the zooming in the boundary corresponding to the target folder image in the preset area, may be that, as the target folder image is zoomed in, the corresponding boundary is zoomed in, so that the boundary becomes larger as the folder image becomes larger, thereby improving display effect.

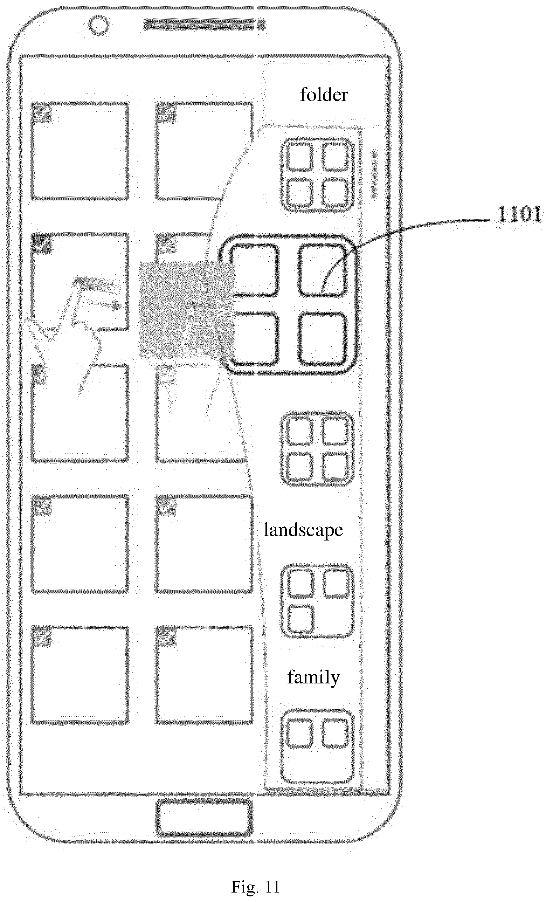

In this embodiment, in the dragging process, the target folder image is adjusted to a zoomed-in three-dimensional perspective image, and the boundary corresponding to the target folder image in the preset area can be zoomed in, thereby improving the display effect. For example, as shown in FIG. 11, a target folder image 1101 is ahead of the perspective view, and other un-triggered folder images are in the rear of the perspective view. Meanwhile, a left-side column line of the target folder image 1101 bulges out.

Optionally, after adjusting the target folder image to a zoomed-in three-dimensional perspective image, and zooming in the boundary corresponding to the target folder image in the preset area, and dragging the target thumbnail image into the folder corresponding to the target folder image, the method further includes: restoring the boundary of the target folder image and the preset area, and hiding the folder image in the preset area.

In this embodiment, after the target thumbnail image is dragged to the folder corresponding to the target folder image, the boundary of the target folder image and the preset area is automatically restored and the folder image in the preset area is hidden, thereby achieving the effect of intelligent management of images to save time for the user.

In this embodiment, a thumbnail image interface including at least two thumbnail images is displayed; when a first touch operation on a first thumbnail image in the at least two thumbnail images is detected, a three-dimensional perspective image interface including a zoomed-in image of the first thumbnail image and remaining thumbnail images except for the first thumbnail image are displayed. The raised image in perspective on the three-dimensional perspective image is the zoomed-in image. Positional relationship between the remaining thumbnail images except for the first thumbnail image and the zoomed-in image on the three-dimensional perspective image interface is the same as the positional relationship in the thumbnail image interface. The thumbnail image closer to the raised image in perspective, has a higher raised height in perspective on the three-dimensional perspective image interface. When a zoomed-out operation on the raised image in perspective is detected, the thumbnail image interface is displayed. When a third touch operation on the thumbnail image interface is detected, at least one folder image is displayed in a preset area of the thumbnail image interface. When a drag operation of dragging a target thumbnail image displayed on the thumbnail image interface to a target folder image is detected, the target thumbnail image is dragged into a folder corresponding to the target folder image. In this way, remaining thumbnail images can be displayed at the same time when displaying a zoomed-in image, so that a user can directly switch to a zoomed-in image of one of the remaining thumbnail images through these displayed thumbnail images, which is simple in operation. Further, images in the thumbnail image interface can be directly moved, thereby simplifying process of moving images.

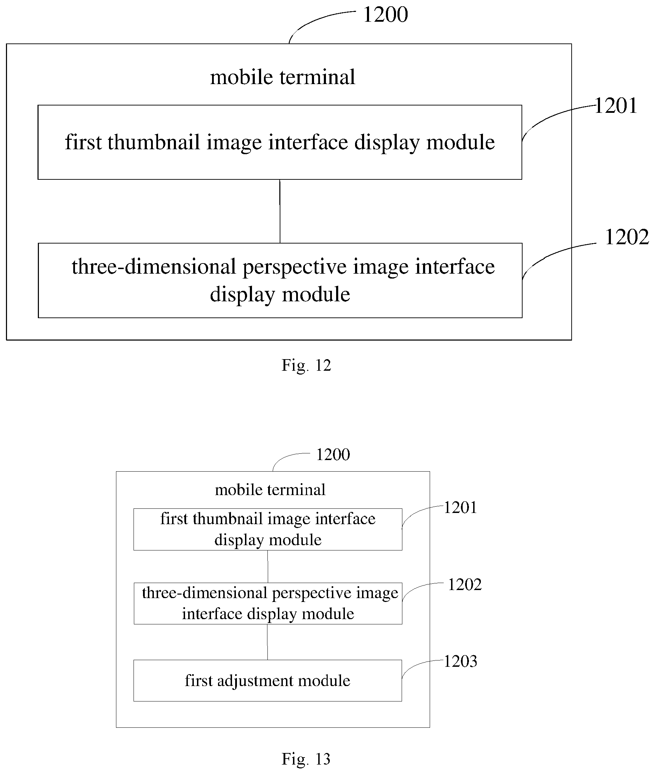

Referring to FIG. 12, FIG. 12 is a schematic diagram of a mobile terminal according to an embodiment of the present disclosure. As shown in FIG. 12, the mobile terminal 1200 includes: a first thumbnail image interface display module 1201 and a three-dimensional perspective image interface display module 1202. The first thumbnail image interface display module 1201 is connected with the three-dimensional perspective image interface display module 1202.

The first thumbnail image interface display module 1201 is configured to, display a thumbnail image interface including at least two thumbnail images.

The three-dimensional perspective image interface display module 1202 is configured to, when a first touch operation on a first thumbnail image in the at least two thumbnail images is detected, display a three-dimensional perspective image interface including a zoomed-in image of the first thumbnail image and remaining thumbnail images except for the first thumbnail image.

The zoomed-in image is a raised image in perspective on the three-dimensional perspective image interface. Positional relationship between the remaining thumbnail images except for the first thumbnail image and the zoomed-in image on the three-dimensional perspective image interface is the same as the positional relationship in the thumbnail image interface. The thumbnail image closer to the raised image in perspective, has a higher raised height in perspective on the three-dimensional perspective image interface.

Optionally, in the three-dimensional perspective image interface, the size of each of the remaining thumbnail images except for the first thumbnail image is gradually decreased in a direction away from the raised image in perspective, and a raised height in perspective of each of the remaining thumbnail images except for the first thumbnail image is gradually decreased in the direction away from the raised image in perspective.

Optionally, as shown in FIG. 13, the mobile terminal 1200 further includes:
a first adjustment module 1203 configured to, when a second touch operation on a second thumbnail image rather than the raised image in perspective on the three-dimensional perspective image interface is detected, adjust the three-dimensional perspective image interface by taking a position of the second thumbnail image as a reference. The raised image in perspective on the adjusted three-dimensional perspective image interface is a zoomed-in image of the second thumbnail image.

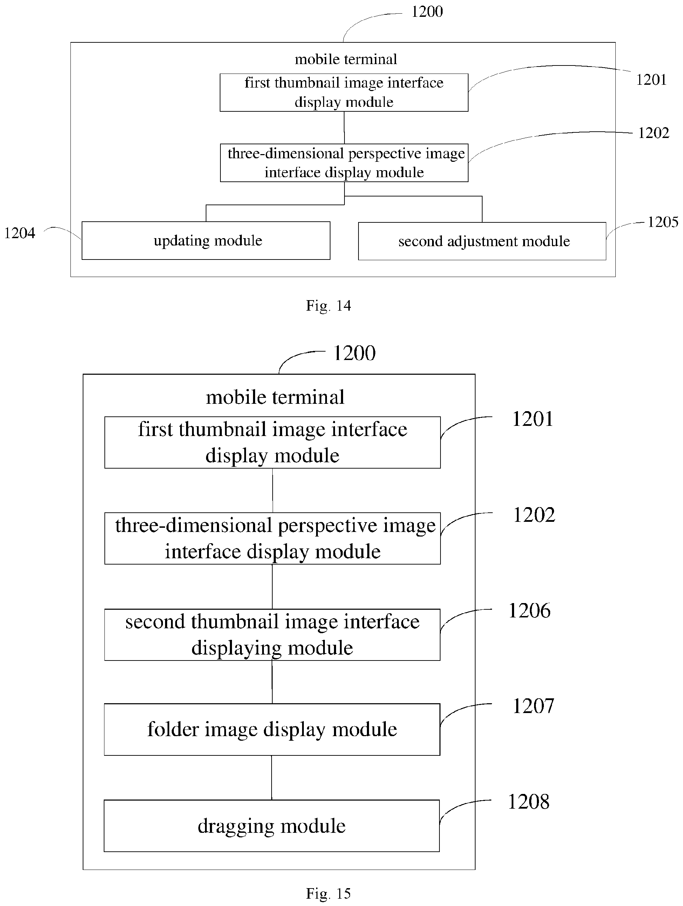

Optionally, as shown in FIG. 14, the mobile terminal 1200 further includes:
an updating module 1204 configured to, when a first direction sliding operation on the raised image in perspective is detected, update the raised image in perspective on the three-dimensional perspective image interface and remaining thumbnail images except for the first thumbnail image, according to a sliding direction of the first direction sliding operation; or,
a second adjustment module 1205 configured to, when a second direction sliding operation on the raised image in perspective is detected, adjust the three-dimensional perspective image interface by taking a position of an adjacent thumbnail image of the zoomed-in image as a reference.

The raised image in perspective on the adjusted three-dimensional perspective image interface is a zoomed-in image of the adjacent thumbnail image.

Optionally, as shown in FIG. 15, the mobile terminal 1200 further includes:
a second thumbnail image interface displaying module 1206 configured to, when a zoomed-out operation on the raised image in perspective is detected, display the thumbnail image interface;
a folder image display module 1207 configured to, when a third touch operation on the thumbnail image interface is detected, display at least one folder image in a preset area of the thumbnail image interface;
a dragging module 1208 configured to, when a drag operation of dragging a target thumbnail image displayed on the thumbnail image interface to a target folder image is detected, drag the target thumbnail image into a folder corresponding to the target folder image.

Optionally, the dragging module 1208 is configured to, when the drag operation of dragging the target thumbnail image displayed on the thumbnail image interface to the target folder image is detected, adjust the target folder image to a zoomed-in three-dimensional perspective image, and zoom in the boundary corresponding to the target folder image in the preset area, and drag the target thumbnail image into the folder corresponding to the target folder image.

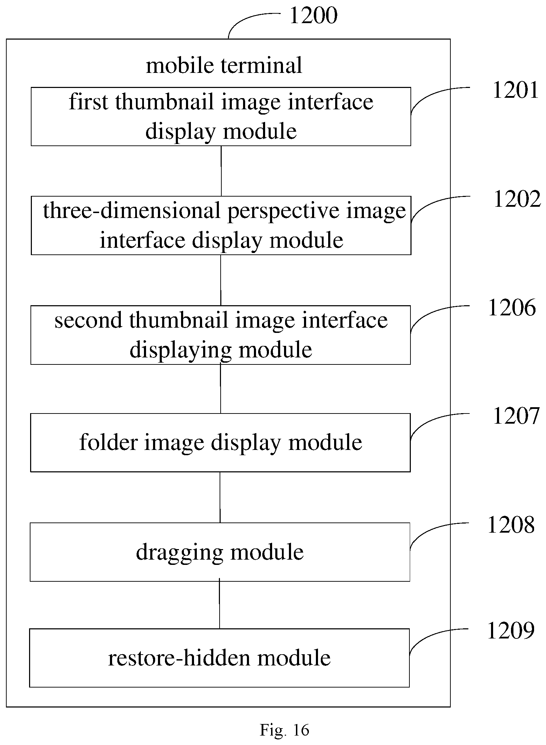

Optionally, as shown in FIG. 16, the mobile terminal 1200 further includes:
a restore-hidden module 1209 configured to restore the boundary of the target folder image and the preset area, and hide the folder image in the preset area.

The mobile terminal provided in this embodiment of the present disclosure can implement the processes implemented by the mobile terminal in the method embodiments in FIG. 1 to FIG. 4. To avoid repetition, details are not described herein again. The mobile terminal can display the remaining thumbnail images at the same time when displaying a zoomed-in image, so that a user can directly switch to a zoomed-in image of one of the remaining thumbnail images through these displayed thumbnail images, which is simple in operation.

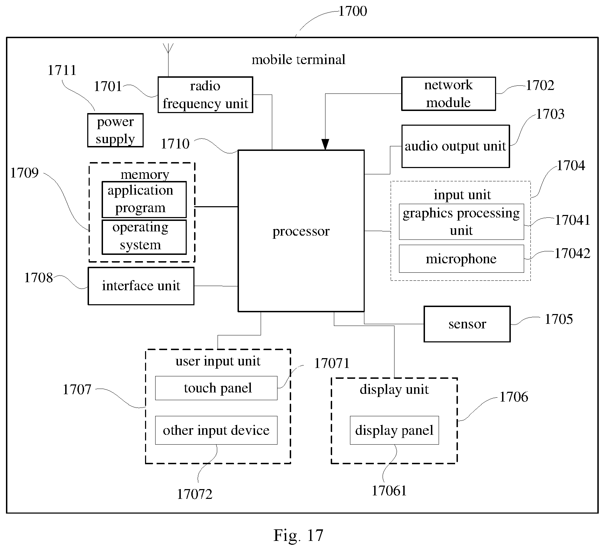

FIG. 17 is a schematic diagram of a hardware structure of a mobile terminal implementing various embodiments of the present disclosure.

The mobile terminal 1700 includes, but is not limited to, a radio frequency unit 1701, a network module 1702, an audio output unit 1703, an input unit 1704, a sensor 1705, a display unit 1706, a user input unit 1707, an interface unit 1708, a memory 1709, a processor 1710, and a power supply 1711. It will be appreciated by those skilled in the art that structures of the mobile terminal shown in FIG. 17 do not constitute a definition of a mobile terminal, which may include more or fewer components than illustrated, or have some components combined, or different component arrangements. In one embodiment of the present disclosure, the mobile terminal includes, but is not limited to, a mobile phone, a tablet computer, a notebook computer, a palmtop computer, an in-vehicle terminal, a wearable device, a pedometer, and the like.

The processor 1710 is configured to, display a thumbnail image interface including at least two thumbnail images; and
when a first touch operation on a first thumbnail image in the at least two thumbnail images is detected, display a three-dimensional perspective image interface including a zoomed-in image of the first thumbnail image and remaining thumbnail images except for the first thumbnail image;
where the zoomed-in image is a raised image in perspective on the three-dimensional perspective image interface; positional relationship between the remaining thumbnail images except for the first thumbnail image and the zoomed-in image on the three-dimensional perspective image interface is the same as positional relationship in the thumbnail image interface; the thumbnail image closer to the raised image in perspective, has a higher raised height in perspective on the three-dimensional perspective image interface.

Optionally, in the three-dimensional perspective image interface, a size of each of the remaining thumbnail images except for the first thumbnail image is gradually decreased in a direction away from the raised image in perspective, and a raised height in perspective of each of the remaining thumbnail images except for the first thumbnail image is gradually decreased in the direction away from the raised image in perspective.

Optionally, after the step of displaying a three-dimensional perspective image interface comprising a zoomed-in image of the first thumbnail image and remaining thumbnail images except for the first thumbnail image, the processor 1710 is configured to, when a second touch operation on a second thumbnail image rather than the raised image in perspective on the three-dimensional perspective image interface is detected, adjust the three-dimensional perspective image interface by taking a position of the second thumbnail image as a reference; where a raised image in perspective on the adjusted three-dimensional perspective image interface is a zoomed-in image of the second thumbnail image.

Optionally, after the step of displaying a three-dimensional perspective image interface comprising a zoomed-in image of the first thumbnail image and remaining thumbnail images except for the first thumbnail image, the processor 1710 is configured to, when a first direction sliding operation on the raised image in perspective is detected, update the raised image in perspective on the three-dimensional perspective image interface and the remaining thumbnail images except for the first thumbnail image, according to a sliding direction of the first direction sliding operation; or, when a second direction sliding operation on the raised image in perspective is detected, adjust the three-dimensional perspective image interface by taking a position of an adjacent thumbnail image of the zoomed-in image as a reference; where a raised image in perspective on the adjusted three-dimensional perspective image interface is a zoomed-in image of the adjacent thumbnail image.

Optionally, after the step of displaying a three-dimensional perspective image interface comprising a zoomed-in image of the first thumbnail image and remaining thumbnail images except for the first thumbnail image, the processor 1710 is configured to, when a zoomed-out operation on the raised image in perspective is detected, display the thumbnail image interface; when a third touch operation on the thumbnail image interface is detected, display at least one folder image in a preset area of the thumbnail image interface; when a drag operation of dragging a target thumbnail image displayed on the thumbnail image interface to a target folder image is detected, drag the target thumbnail image into a folder corresponding to the target folder image.

Optionally, when performing the step of when a drag operation of dragging a target thumbnail image displayed on the thumbnail image interface to a target folder image is detected, dragging the target thumbnail image into a folder corresponding to the target folder image, the processor 1710 is configured to, when the drag operation of dragging the target thumbnail image displayed on the thumbnail image interface to the target folder image is detected, adjust the target folder image to a zoomed-in three-dimensional perspective image, zoom in a boundary corresponding to the target folder image in the preset area and drag the target thumbnail image into the folder corresponding to the target folder image.

Optionally, after the step of adjusting the target folder image to a zoomed-in three-dimensional perspective image, zooming in a boundary corresponding to the target folder image in the preset area and dragging the target thumbnail image into the folder corresponding to the target folder image, the processor 1710 is configured to, restore the boundary of the target folder image and the preset area, and hide the folder image in the preset area.

The mobile terminal 1700 can display the remaining thumbnail images at the same time when displaying a zoomed-in image, so that a user can directly switch to a zoomed-in image of one of the remaining thumbnail images through these displayed thumbnail images, which is simple in operation.

It should be understood that in this embodiment of the present disclosure, the radio frequency unit 1701 may be configured to receive and transmit signals during receiving and transmitting information or a call. Specifically, the radio frequency unit 1701 receives downlink data from a base station and then transmits the downlink data to the processor 1710 for processing. Uplink data is transmitted to the base station. Generally, the radio frequency unit 1701 includes, but is not limited to, an antenna, at least one amplifier, a transceiver, a coupler, a low noise amplifier, a duplexer, and the like. In addition, the radio frequency unit 1701 may also communicate with the network and other devices through a wireless communication system.

The mobile terminal provides wireless broadband Internet access to the user through the network module 1702, such as assisting the user in receiving and transmitting email, browsing web pages, and accessing streaming media.

The audio output unit 1703 may convert the audio data received by the radio frequency unit 1701 or the network module 1702 or stored in the memory 1709 into an audio signal and output as sound. Moreover, the audio output unit 1703 may also provide audio output (e.g., call signal reception sound, message reception sound, etc.) related to a specific function performed by the mobile terminal 1700. The audio output unit 1703 includes a speaker, a buzzer, a receiver, and the like.

The input unit 1704 is used for receiving an audio or video signal. The input unit 1704 may include a Graphics Processing Unit (GPU) 17041 and a microphone 17042. The GPU 17041 processes image data of static pictures or videos obtained by an image capturing apparatus (such as a camera) in a video capturing mode or an image capturing mode. The processed image frame may be displayed on the display unit 1706. The image frames processed by the graphics processor 17041 may be stored in the memory 1709 (or other storage medium) or transmitted via the radio frequency unit 1701 or the network module 1702. The microphone 17042 can receive sound and can process such sound into audio data. The processed audio data may be converted into a format output that may be transmitted to the mobile communication base station via the radio frequency unit 1701 in the case of a telephone talk mode.

The mobile terminal 1700 further includes at least one sensor 1705, such as a light sensor, a motion sensor, and other sensors. Specifically, the light sensor includes an ambient light sensor and a proximity sensor. The ambient light sensor can adjust brightness of a display panel 17061 according to the brightness of the ambient light. The proximity sensor can turn off the display panel 17061 and/or backlight when the mobile terminal 1700 moves to the ear. As one of the motion sensors, an accelerometer sensor can detect the magnitude of the acceleration in each direction (generally three axes), can detect the magnitude and direction of the gravity when stationary, and can be configured to identify the attitude of the mobile terminal (such as horizontal/vertical screen switching, related games, magnetometer attitude calibration), vibration identification related functions (such as pedometer, knocking), and the like. The sensor 1705 may further include a fingerprint sensor, a pressure sensor, an iris sensor, a molecular sensor, a gyroscope, a barometer, a hygrometer, a thermometer, an infrared sensor, and the like, which will not be elaborated herein.

The display unit 1706 is configured to display information input by or provided to the user. The display unit 1706 may include a display panel 17061, which may be configured in the form of a Liquid Crystal Display (LCD), an Organic Light-Emitting Diode (OLED), or the like.

The user input unit 1707 may be configured to receive the input number or character information, and to generate a key signal input related to the user setting and the function control of the mobile terminal. Specifically, the user input unit 1707 includes a touch panel 17071 and other input devices 17072. The touch panel 17071, also referred to as a touch screen, may collect touch operations on or near the touch panel (e.g., operations on or near the touch panel 17071 using any suitable object or accessory, such as a finger, stylus, or the like). The touch panel 17071 may include a touch detection device and a touch controller. The touch detection device detects a touch orientation of the user, detects a signal generated by the touch operation, and transmits the signal to the touch controller. The touch controller receives touch information from the touch detection device and converts it into contact coordinates, which are then transmitted to the processor 1710, receives commands from the processor 1710 and execute them. In addition, the touch panel 17071 may be implemented in various types such as a resistive type, a capacitive type, an infrared ray, and a surface acoustic wave. In addition to the touch panel 17071, the user input unit 1707 may further include other input devices 17072. Specifically, other input devices 17072 may include, but are not limited to, a physical keyboard, a function key (such as a volume control key, an on-off key), a trackball, a mouse, and a joystick, which will not be elaborated herein.

Further, the touch panel 17071 may be overlaid on the display panel 17061. When the touch panel 17071 detects a touch operation on or near the touch panel, the touch panel 17071 transmits it to the processor 1710 to determine a type of a touch event. Then, the processor 1710 provides a corresponding visual output on the display panel 17061 according to the type of the touch event. Although in FIG. 17, the touch panel 17071 and the display panel 17061 are implemented as two separate components to implement the input and output functions of the mobile terminal, in some embodiments, the touch panel 17071 and the display panel 17061 may be integrated to implement the input and output functions of the mobile terminal, which are not specifically limited herein.

The interface unit 1708 is an interface through which an external device is connected to the mobile terminal 1700. For example, the external device may include a wired or wireless headset port, an external power (or battery charger) port, a wired or wireless data port, a memory card port, a port for connecting a device having an identification module, an audio input/output (I/O) port, a video I/O port, a headset port, and the like. The interface unit 1708 may be configured to receive input (e.g., data information, power, etc.) from the external device and transmit the received input to one or more elements within the mobile terminal 1700 or may be configured to transmit data between the mobile terminal 1700 and the external device.

The memory 1709 may be configured to store software programs and various data. The memory 1709 may mainly include a program storage area and a data storage area. The program storage area may store an operating system, an application program (such as a sound play function, an image play function) required by at least one function, and the like. The data storage area may store data (such as audio data, a phone book) created according to use of the mobile terminal. In addition, the memory 1709 may include high speed random access memory, and may also include non-volatile memory, such as at least one magnetic disk storage device, flash memory device, or other volatile solid state storage device.

The processor 1710 is a control center of the mobile terminal, connects various parts of the entire mobile terminal by various interfaces and lines, executes various functions of the mobile terminal and processes data by running or executing software programs and/or modules stored in the memory 1709 and invoking data stored in the memory 1709, thereby performing overall monitoring of the mobile terminal. The processor 1710 may include one or more processing units. Optionally, the processor 1710 may integrate an application processor and a modem processor. The application processor primarily processes the operating system, the user interface and the application program. The modem processor primarily processes wireless communications. It will be appreciated that the modem processor may also not be integrated into the processor 1710.

The mobile terminal 1700 may further include a power source 1711 (such as a battery) that supplies power to the various components. Optionally, the power source 1711 may be logically connected to the processor 1710 through a power management system to perform functions such as managing charging, discharging, and power consumption management through the power management system.

In addition, the mobile terminal 1700 includes functional modules not shown, which will not be elaborated herein.

Optionally, one embodiment of the present disclosure further provides a mobile terminal including a processor 1710, a memory 1709, and a computer program stored in the memory 1709 and executable on the processor 1710. When the computer program is executed by the processor 1710, each of the processes in the image display method embodiment is implemented, and the same technical effect can be achieved. To avoid repetition, details are not described herein.

One embodiment of the present disclosure further provides a computer readable storage medium including a computer program stored thereon. The computer program is executed by a processor to implement each process of the above image display method embodiment, and the same technical effect can be achieved. To avoid repetition, details are not described herein. The computer-readable storage medium includes, for example, a Read-Only Memory (ROM), a Random Access Memory (RAM), a magnetic disk, or an optical disk.

It is to be noted that terms "comprise", "include" or any other variations are intended to encompass a non-exclusive inclusion, such that a process, method, system, commodity, or device that include a series of steps or elements include not only those steps or elements but also other steps or elements that are not explicitly listed, or steps or elements that are inherent to such process, method, commodity, or device. An element defined by the phrase "comprising a ..." does not exclude the presence of additional equivalent elements in the process, method, commodity, or device including the element.

From the above description of the embodiments, it will be apparent to those skilled in the art that the method of the above embodiments may be implemented by means of software plus the necessary general hardware platform, but may be implemented by means of hardware, but in many cases the former is the preferred embodiment. Based on such an understanding, the technical solution of the present disclosure, in essence or in part contributing to the related art, may be embodied in the form of a software product stored in a storage medium (such as a ROM/RAM, a magnetic disk, or an optical disk) including instructions for causing a terminal (which may be a mobile phone, a computer, a server, an air conditioner, or a network device) to perform the methods described in the various embodiments of the present disclosure.

## Claims

1. An image display method, comprising:
displaying (101) a thumbnail image interface comprising at least two thumbnail images; wherein the thumbnail image interface is a two-dimensional perspective image interface;
wherein the method is **characterized by** further comprising: when a first touch operation on a first thumbnail image in the at least two thumbnail images is detected, displaying (102) a three-dimensional perspective image interface comprising a zoomed-in image of the first thumbnail image and remaining thumbnail images of the at least two thumbnail images; wherein the three-dimensional perspective image interface is an image with a three-dimensional perspective effect displayed on a two-dimensional display screen or a three-dimensional perspective image interface displayed on a three-dimensional display screen;
wherein the zoomed-in image is a raised image in perspective on the three-dimensional perspective image interface and a raised height in perspective of each area of the raised image in perspective is consistent; positional relationship between the remaining thumbnail images of the at least two thumbnail images and the zoomed-in image on the three-dimensional perspective image interface is the same as positional relationship in the thumbnail image interface; the thumbnail image closer to the raised image in perspective, has a higher raised height in perspective on the three-dimensional perspective image interface.

2. The method according to claim 1, wherein in the three-dimensional perspective image interface, a size of each of the remaining thumbnail images of the at least two thumbnail images is gradually decreased in a direction away from the raised image in perspective, and a raised height in perspective of each of the remaining thumbnail images of the at least two thumbnail images is gradually decreased in the direction away from the raised image in perspective.

3. The method according to claim 1 or 2, wherein the method further comprises: after the step of displaying a three-dimensional perspective image interface comprising a zoomed-in image of the first thumbnail image and remaining thumbnail images of the at least two thumbnail images,
when a second touch operation on a second thumbnail image rather than the raised image in perspective on the three-dimensional perspective image interface is detected, adjusting the three-dimensional perspective image interface by taking a position of the second thumbnail image as a reference;
wherein a raised image in perspective on the adjusted three-dimensional perspective image interface is a zoomed-in image of the second thumbnail image;
or,
wherein the method further comprises: after the step of displaying a three-dimensional perspective image interface comprising a zoomed-in image of the first thumbnail image and remaining thumbnail images of the at least two thumbnail images,
when a first direction sliding operation on the raised image in perspective is detected, updating the raised image in perspective on the three-dimensional perspective image interface and the remaining thumbnail images of the at least two thumbnail images according to a sliding direction of the first direction sliding operation; or,
when a second direction sliding operation on the raised image in perspective is detected, adjusting the three-dimensional perspective image interface by taking a position of an adjacent thumbnail image of the zoomed-in image as a reference;
wherein a raised image in perspective on the adjusted three-dimensional perspective image interface is a zoomed-in image of the adjacent thumbnail image.

4. The method according to claim 1 or 2, wherein the method further comprises: after the step of displaying a three-dimensional perspective image interface comprising a zoomed-in image of the first thumbnail image and remaining thumbnail images of the at least two thumbnail images,
when a zoomed-out operation on the raised image in perspective is detected, displaying (403) the thumbnail image interface;
when a third touch operation on the thumbnail image interface is detected, displaying (404) at least one folder image in a preset area of the thumbnail image interface;
when a drag operation of dragging a target thumbnail image displayed on the thumbnail image interface to a target folder image is detected, dragging (405) the target thumbnail image into a folder corresponding to the target folder image.

5. The method according to claim 4, wherein the step of when a drag operation of dragging a target thumbnail image displayed on the thumbnail image interface to a target folder image is detected, dragging the target thumbnail image into a folder corresponding to the target folder image, comprises:
when the drag operation of dragging the target thumbnail image displayed on the thumbnail image interface to the target folder image is detected, adjusting the target folder image to a zoomed-in three-dimensional perspective image, zooming in a boundary corresponding to the target folder image in the preset area and dragging the target thumbnail image into the folder corresponding to the target folder image.

6. The method according to claim 5, wherein the method further comprises: after the step of adjusting the target folder image to a zoomed-in three-dimensional perspective image, zooming in a boundary corresponding to the target folder image in the preset area and dragging the target thumbnail image into the folder corresponding to the target folder image,
restoring the boundary of the target folder image and the preset area, and hiding the folder image in the preset area.

7. A mobile terminal (1200), comprising:
a first thumbnail image interface display module (1201) configured to display a thumbnail image interface comprising at least two thumbnail images; wherein the thumbnail image interface is a two-dimensional perspective image interface;
wherein the mobile terminal (1200) is **characterized by** further comprising: a three-dimensional perspective image interface display module (1202) configured to, when a first touch operation on a first thumbnail image in the at least two thumbnail images is detected, display a three-dimensional perspective image interface comprising a zoomed-in image of the first thumbnail image and remaining thumbnail images of the at least two thumbnail images; wherein the three-dimensional perspective image interface is an image with a three-dimensional perspective effect displayed on a two-dimensional display screen or a three-dimensional perspective image interface displayed on a three-dimensional display screen;
wherein the zoomed-in image is a raised image in perspective on the three-dimensional perspective image interface and a raised height in perspective of each area of the raised image in perspective is consistent; positional relationship between the remaining thumbnail images of the at least two thumbnail images and the zoomed-in image on the three-dimensional perspective image interface is the same as positional relationship in the thumbnail image interface; the thumbnail image closer to the raised image in perspective, has a higher raised height in perspective on the three-dimensional perspective image interface.

8. The mobile terminal (1200) according to claim 7, wherein in the three-dimensional perspective image interface, a size of each of the remaining thumbnail images of the at least two thumbnail images is gradually decreased in a direction away from the raised image in perspective, and a raised height in perspective of each of the remaining thumbnail images of the at least two thumbnail images is gradually decreased in the direction away from the raised image in perspective.

9. The mobile terminal (1200) according to claim 7 or 8, wherein the mobile terminal (1200) further comprises:
a first adjustment module (1203) configured to, when a second touch operation on a second thumbnail image rather than the raised image in perspective on the three-dimensional perspective image interface is detected, adjust the three-dimensional perspective image interface by taking a position of the second thumbnail image as a reference;
wherein a raised image in perspective on the adjusted three-dimensional perspective image interface is a zoomed-in image of the second thumbnail image;
or,
wherein the mobile terminal (1200) further comprises:
an updating module (1204) configured to, when a first direction sliding operation on the raised image in perspective is detected, update the raised image in perspective on the three-dimensional perspective image interface and the remaining thumbnail images of the at least two thumbnail images according to a sliding direction of the first direction sliding operation; or,
a second adjustment module (1205) configured to, when a second direction sliding operation on the raised image in perspective is detected, adjust the three-dimensional perspective image interface by taking a position of an adjacent thumbnail image of the zoomed-in image as a reference;
wherein the raised image in perspective on the adjusted three-dimensional perspective image interface is a zoomed-in image of the adjacent thumbnail image.

10. The mobile terminal (1200) according to claim 7 or 8, wherein the mobile terminal (1200) further comprises:
a second thumbnail image interface displaying module (1206) configured to, when a zoomed-out operation on the raised image in perspective is detected, display the thumbnail image interface;
a folder image display module (1207) configured to, when a third touch operation on the thumbnail image interface is detected, display at least one folder image in a preset area of the thumbnail image interface;
a dragging module (1208) configured to, when a drag operation of dragging a target thumbnail image displayed on the thumbnail image interface to a target folder image is detected, drag the target thumbnail image into a folder corresponding to the target folder image.

11. The mobile terminal (1200) according to claim 10, wherein the dragging module (1208) is configured to, when the drag operation of dragging the target thumbnail image displayed on the thumbnail image interface to the target folder image is detected, adjust the target folder image to a zoomed-in three-dimensional perspective image, zoom in a boundary corresponding to the target folder image in the preset area, and drag the target thumbnail image into the folder corresponding to the target folder image.

12. The mobile terminal (1200) according to claim 11, wherein the mobile terminal (1200) further comprises:
a restore-hidden module (1209) configured to restore the boundary of the target folder image and the preset area, and hide the folder image in the preset area.

13. The method according to claim 1, wherein the first thumbnail image is a video; and the raised image in perspective on the three-dimensional perspective image interface is a zoomed-in video in a playing state of the first thumbnail image.

14. The method according to claim 13, wherein the remaining thumbnail images of the at least two thumbnail images are videos; and the remaining thumbnail images of the at least two thumbnail images on the three-dimensional perspective image interface are videos in a paused state.

15. The method according to claim 13, wherein the remaining thumbnail images of the at least two thumbnail images except for the first thumbnail image are videos; the remaining thumbnail images of the at least two thumbnail images on the three-dimensional perspective image interface are videos in in a playing state;
the method further includes:
controlling a mobile terminal to only output audio of the raised image in perspective.

## Patentansprüche

1. Bildanzeigeverfahren, umfassend:
Anzeigen (101) einer Miniaturbildschnittstelle, die mindestens zwei Miniaturbilder umfasst; wobei die Miniaturbildschnittstelle eine zweidimensionale perspektivische Bildschnittstelle ist;
wobei das Verfahren **dadurch gekennzeichnet ist, dass** es ferner Folgendes umfasst: wenn ein erster Berührungsvorgang an einem ersten Miniaturbild in den mindestens zwei Miniaturbildern erfasst wird, Anzeigen (102) einer dreidimensionalen perspektivischen Bildschnittstelle, die ein eingezoomtes Bild des ersten Miniaturbildes und der verbleibenden Miniaturbilder der mindestens zwei Miniaturbilder umfasst;
wobei die dreidimensionale perspektivische Bildschnittstelle ein Bild mit einem dreidimensionalen perspektivischen Effekt ist, das auf einem zweidimensionalen Anzeigebildschirm angezeigt wird, oder eine dreidimensionale perspektivische Bildschnittstelle ist, die auf einem dreidimensionalen Anzeigebildschirm angezeigt wird;
wobei das eingezoomte Bild ein erhöhtes Bild in der Perspektive auf der dreidimensionalen perspektivischen Bildschnittstelle ist und eine erhöhte Höhe in der Perspektive eines jeden Bereichs des eingezoomten Bildes in der Perspektive konsistent ist; die Positionsbeziehung zwischen den verbleibenden Miniaturbildern der mindestens zwei Miniaturbilder und
dem eingezoomten Bild auf der dreidimensionalen perspektivischen Bildschnittstelle die gleiche wie die Positionsbeziehung in der Miniaturbildschnittstelle ist;
das Miniaturbild, das dem erhöhten Bild in der Perspektive näher ist, eine höhere erhöhte Höhe in der Perspektive auf der dreidimensionalen perspektivischen Bildschnittstelle aufweist.

2. Verfahren nach Anspruch 1, wobei in der dreidimensionalen perspektivischen Bildschnittstelle eine Größe eines jeden der verbleibenden Miniaturbilder der mindestens zwei Miniaturbilder in einer Richtung wegführend von dem erhöhten Bild in der Perspektive allmählich verringert wird und eine erhöhte Höhe in der Perspektive eines jeden der verbleibenden Miniaturbilder der mindestens zwei Miniaturbilder in der Richtung wegführend von dem erhöhten Bild in der Perspektive allmählich verringert wird.

3. Verfahren nach Anspruch 1 oder 2, wobei das Verfahren ferner umfasst: nach dem Schritt zum Anzeigen einer dreidimensionalen perspektivischen Bildschnittstelle, die ein eingezoomtes Bild des ersten Miniaturbildes und der verbleibenden Miniaturbilder der mindestens zwei Miniaturbilder umfasst,
wenn ein zweiter Berührungsvorgang auf einem zweiten Miniaturbild anstelle des erhöhten Bildes in der Perspektive auf der dreidimensionalen perspektivischen Bildschnittstelle erfasst wird, Anpassen der dreidimensionalen perspektivischen Bildschnittstelle, indem eine Position des zweiten Miniaturbildes als Referenz genommen wird;
wobei ein erhöhtes Bild in der Perspektive auf der angepassten dreidimensionalen perspektivischen Bildschnittstelle ein eingezoomtes Bild des zweiten Miniaturbildes ist;
oder
wobei das Verfahren ferner umfasst: nach dem Schritt zum Anzeigen einer dreidimensionalen perspektivischen Bildschnittstelle, die ein eingezoomtes Bild des ersten Miniaturbildes und der verbleibenden Miniaturbilder der mindestens zwei Miniaturbilder umfasst,
wenn ein erster Richtungsgleitvorgang auf dem erhöhten Bild in der Perspektive erfasst wird, Aktualisieren des erhöhten Bildes in der Perspektive auf der dreidimensionalen perspektivischen Bildschnittstelle und der verbleibenden Miniaturbilder der mindestens zwei Miniaturbilder gemäß einer Gleitrichtung des ersten Richtungsgleitvorgangs; oder
wenn ein zweiter Richtungsgleitvorgang auf dem erhöhten Bild in der Perspektive erfasst wird, Anpassen der dreidimensionalen perspektivischen Bildschnittstelle, indem eine Position eines benachbarten Miniaturbildes des eingezoomten Bildes als Referenz genommen wird; wobei ein erhöhtes Bild in der Perspektive auf der angepassten dreidimensionalen perspektivischen Bildschnittstelle ein eingezoomtes Bild des benachbarten Miniaturbildes ist.

4. Verfahren nach Anspruch 1 oder 2, wobei das Verfahren ferner umfasst: nach dem Schritt zum Anzeigen einer dreidimensionalen perspektivischen Bildschnittstelle, die ein eingezoomtes Bild des ersten Miniaturbildes und der verbleibenden Miniaturbilder der mindestens zwei Miniaturbilder umfasst,
wenn ein ausgezoomter Vorgang auf dem erhöhten Bild in der Perspektive erfasst wird, Anzeigen (403) der Miniaturbildschnittstelle;
wenn ein dritter Berührungsvorgang auf der Miniaturbildschnittstelle erfasst wird, Anzeigen (404) mindestens eines Ordnerbildes in einem voreingestellten Bereich der Miniaturbildschnittstelle;
wenn ein Ziehvorgang des Ziehens eines auf der Miniaturbildschnittstelle angezeigten Zielminiaturbildes auf ein Zielordnerbild erkannt wird, Ziehen (405) des Zielminiaturbildes in einen Ordner, der dem Zielordnerbild entspricht.

5. Verfahren nach Anspruch 4, wobei der Schritt zum Ziehen des Zielminiaturbilds, das auf der Miniaturbildschnittstelle angezeigt wird, in einen Ordner, der dem Zielordnerbild entspricht, wenn ein Ziehvorgang des Ziehens des auf der Miniaturbildschnittstelle angezeigten Zielminiaturbildes auf das Zielordnerbild erfasst wird, umfasst:
wenn der Ziehvorgang des Ziehens des auf der Miniaturbildschnittstelle angezeigten Zielminiaturbildes auf das Zielordnerbild erfasst wird,
Anpassen des Zielordnerbildes an ein eingezoomtes dreidimensionales perspektivisches Bild, Einzoomen einer Grenze, die dem Zielordnerbild in dem voreingestellten Bereich entspricht, und Ziehen des Zielminiaturbildes in den Ordner, der dem Zielordnerbild entspricht.

6. Verfahren nach Anspruch 5, wobei das Verfahren ferner umfasst: nach dem Schritt zum Anpassen des Zielordnerbildes auf ein eingezoomtes dreidimensionales perspektivisches Bild, Einzoomen einer Grenze, die dem Zielordnerbild in dem voreingestellten Bereich entspricht, und Ziehen des Zielminiaturbildes in den Ordner, der dem Zielordnerbild entspricht, Wiederherstellen der Grenze des Zielordnerbildes und des voreingestellten Bereichs und Ausblenden des Ordnerbildes im voreingestellten Bereich.

7. Mobiles Endgerät (1200), umfassend:
ein erstes Miniaturbildschnittstellenanzeigemodul (1201), das konfiguriert ist, um eine Miniaturbildschnittstelle anzuzeigen, die mindestens zwei Miniaturbilder umfasst; wobei die Miniaturbildschnittstelle eine zweidimensionale perspektivische Bildschnittstelle ist;
wobei das mobile Endgerät (1200) **dadurch gekennzeichnet ist, dass** es ferner Folgendes umfasst: ein Anzeigemodul (1202) für eine dreidimensionale perspektivische Bildschnittstelle, das konfiguriert ist, wenn ein erster Berührungsvorgang auf einem ersten Miniaturbild in den mindestens zwei Miniaturbildern erfasst wird, um eine dreidimensionale perspektivische Bildschnittstelle anzuzeigen, die ein eingezoomtes Bild des ersten Miniaturbildes und der verbleibenden Miniaturbilder der mindestens zwei Miniaturbilder umfasst;
wobei die dreidimensionale perspektivische Bildschnittstelle ein Bild mit einem dreidimensionalen perspektivischen Effekt ist, das auf einem zweidimensionalen Anzeigebildschirm angezeigt wird, oder eine dreidimensionale perspektivische Bildschnittstelle ist, die auf einem dreidimensionalen Anzeigebildschirm angezeigt wird;
wobei das eingezoomte Bild ein erhöhtes Bild in der Perspektive auf der dreidimensionalen perspektivischen Bildschnittstelle ist und eine erhöhte Höhe in der Perspektive eines jeden Bereichs des eingezoomten Bildes in der Perspektive konsistent ist; die Positionsbeziehung zwischen den verbleibenden Miniaturbildern der mindestens zwei Miniaturbilder und dem eingezoomten Bild auf der dreidimensionalen perspektivischen Bildschnittstelle die gleiche wie die Positionsbeziehung in der Miniaturbildschnittstelle ist;
das Miniaturbild, das dem erhöhten Bild in der Perspektive näher ist, eine höhere erhöhte Höhe in der Perspektive auf der dreidimensionalen perspektivischen Bildschnittstelle aufweist.

8. Mobiles Endgerät (1200) nach Anspruch 7, wobei in der dreidimensionalen perspektivischen Bildschnittstelle eine Größe eines jeden der verbleibenden Miniaturbilder der mindestens zwei Miniaturbilder in einer Richtung wegführend von dem erhöhten Bild in der Perspektive allmählich verringert wird und eine erhöhte Höhe in der Perspektive eines jeden der verbleibenden Miniaturbilder der mindestens zwei Miniaturbilder in der Richtung wegführend von dem erhöhten Bild in der Perspektive allmählich verringert wird.

9. Mobiles Endgerät (1200) nach Anspruch 7 oder 8, wobei das mobile Endgerät (1200) ferner Folgendes umfasst:
ein erstes Anpassungsmodul (1203), das konfiguriert ist, wenn ein zweiter Berührungsvorgang auf einem zweiten Miniaturbild anstelle des erhöhten Bildes in der Perspektive auf der dreidimensionalen perspektivischen Bildschnittstelle erfasst wird, um die dreidimensionale perspektivische Bildschnittstelle anzupassen, indem eine Position des zweiten Miniaturbildes als Referenz genommen wird;
wobei ein erhöhtes Bild in der Perspektive auf der angepassten dreidimensionalen perspektivischen Bildschnittstelle ein eingezoomtes Bild des zweiten Miniaturbildes ist;
oder
wobei das mobile Endgerät (1200) ferner Folgendes umfasst:
ein Aktualisierungsmodul (1204), das konfiguriert ist, wenn ein erster Richtungsgleitvorgang auf dem erhöhten Bild in der Perspektive erfasst wird, um das erhöhte Bild in der Perspektive auf der dreidimensionalen perspektivischen Bildschnittstelle und die verbleibenden Miniaturbilder der mindestens zwei Miniaturbilder gemäß einer Gleitrichtung des ersten Richtungsgleitvorgangs zu aktualisieren; oder
ein zweites Anpassungsmodul (1205), das konfiguriert ist, wenn ein zweiter Richtungsgleitvorgang auf dem erhöhten Bild in der Perspektive erfasst wird, um die dreidimensionale perspektivische Bildschnittstelle anzupassen, indem eine Position eines benachbarten Miniaturbildes des eingezoomten Bildes als Referenz genommen wird;
wobei das erhöhte Bild in der Perspektive auf der angepassten dreidimensionalen perspektivischen Bildschnittstelle ein eingezoomtes Bild des benachbarten Miniaturbildes ist.

10. Mobiles Endgerät (1200) nach Anspruch 7 oder 8, wobei das mobile Endgerät (1200) ferner Folgendes umfasst:
ein zweites Miniaturbildschnittstellenanzeigemodul (1206), das konfiguriert ist, um die Miniaturbildschnittstelle anzuzeigen, wenn ein ausgezoomter Vorgang auf dem erhöhten Bild in der Perspektive erfasst wird;
ein Ordnerbildanzeigemodul (1207), das konfiguriert ist, wenn ein dritter Berührungsvorgang auf der Miniaturbildschnittstelle erfasst wird, um mindestens ein Ordnerbild in einem voreingestellten Bereich der Miniaturbildschnittstelle anzuzeigen;
ein Ziehmodul (1208), das konfiguriert ist, wenn ein Ziehvorgang des Ziehens des auf der Miniaturbildschnittstelle angezeigten Zielminiaturbildes auf das Zielordnerbild erfasst wird, um das Zielminiaturbild in einen Ordner zu ziehen, der dem Zielordnerbild entspricht.

11. Mobiles Endgerät (1200) nach Anspruch 10, wobei das Ziehmodul (1208) konfiguriert ist, wenn der Ziehvorgang des Ziehens des auf der Miniaturbildschnittstelle angezeigten Zielminiaturbildes auf das Zielordnerbild erfasst wird, um das Zielordnerbild auf ein eingezoomtes dreidimensionales perspektivisches Bild anzupassen, eine Grenze, die dem Zielordnerbild in dem voreingestellten Bereich entspricht, einzuzoomen und das Zielminiaturbild in den Ordner, der dem Zielordnerbild entspricht, zu ziehen.

12. Mobiles Endgerät (1200) nach Anspruch 11, wobei das mobile Endgerät (1200) ferner Folgendes umfasst:
ein Wiederherstellen-/Ausblendenmodul (1209), der konfiguriert ist, um die Grenze des Zielordnerbildes und des voreingestellten Bereichs wiederherzustellen und das Ordnerbild im voreingestellten Bereich auszublenden.

13. Verfahren nach Anspruch 1, wobei das erste Miniaturbild ein Video ist; und das erhöhte Bild in der Perspektive auf der dreidimensionalen perspektivischen Bildschnittstelle ein eingezoomtes Video in einem Wiedergabezustand des ersten Miniaturbildes ist.

14. Verfahren nach Anspruch 13, wobei die verbleibenden Miniaturbilder der mindestens zwei Miniaturbilder Videos sind; und die verbleibenden Miniaturbilder der mindestens zwei Miniaturbilder auf der dreidimensionalen perspektivischen Bildschnittstelle Videos in einem angehaltenen Zustand sind.

15. Verfahren nach Anspruch 13, wobei die verbleibenden Miniaturbilder der mindestens zwei Miniaturbilder mit Ausnahme des ersten Miniaturbildes Videos sind; die verbleibenden Miniaturbilder der mindestens zwei Miniaturbilder auf der dreidimensionalen perspektivischen Bildschnittstelle Videos in einem Wiedergabezustand sind;
das Verfahren ferner Folgendes einschließt:
Steuern eines mobilen Endgeräts, um nur Audio des erhöhten Bildes in der Perspektive auszugeben.

## Revendications

1. Procédé d'affichage d'image, comprenant :
afficher (101) une interface de vignette comprenant au moins deux vignettes ; dans lequel l'interface de vignette est une interface d'image en perspective bidimensionnelle ;
dans lequel le procédé est **caractérisé en ce qu'**il comprend en outre : lorsqu'une première opération tactile sur une première vignette dans les au moins deux vignettes est détectée, afficher (102) une interface d'image en perspective tridimensionnelle comprenant une image agrandie de la première vignette et des vignettes restantes des au moins deux vignettes ;
dans lequel l'interface d'image en perspective tridimensionnelle est une image avec un effet de perspective tridimensionnelle affichée sur un écran d'affichage bidimensionnel ou une interface d'image en perspective tridimensionnelle affichée sur un écran d'affichage tridimensionnel ;
dans lequel l'image agrandie est une image en relief en perspective sur l'interface d'image en perspective tridimensionnelle et une hauteur en relief en perspective de chaque zone de l'image en relief en perspective est cohérente ; la relation de position entre les vignettes restantes des au moins deux vignettes et l'image agrandie sur l'interface d'image en perspective tridimensionnelle est la même que la relation de position dans l'interface de vignette ; la vignette la plus proche de l'image en relief en perspective a une hauteur en relief en perspective plus élevée sur l'interface d'image en perspective tridimensionnelle.

2. Procédé selon la revendication 1, dans lequel, dans l'interface d'image en perspective tridimensionnelle, une taille de chacune des vignettes restantes des au moins deux vignettes est progressivement réduite dans une direction s'éloignant de l'image en relief en perspective, et une hauteur en relief en perspective de chacune des vignettes restantes des au moins deux vignettes est progressivement réduite dans la direction s'éloignant de l'image en relief en perspective.

3. Procédé selon la revendication 1 ou 2, dans lequel le procédé comprend en outre : après l'étape d'affichage d'une interface d'image en perspective tridimensionnelle comprenant une image agrandie de la première vignette et des vignettes restantes des au moins deux vignettes, lorsqu'une deuxième opération tactile sur une seconde vignette plutôt que sur l'image en relief en perspective sur l'interface d'image en perspective tridimensionnelle est détectée, régler l'interface d'image en perspective tridimensionnelle en prenant une position de la seconde vignette comme référence ;
dans lequel une image en relief en perspective sur l'interface d'image en perspective tridimensionnelle réglée est une image agrandie de la seconde vignette ; ou,
dans lequel le procédé comprend en outre : après l'étape d'affichage d'une interface d'image en perspective tridimensionnelle comprenant une image agrandie de la première vignette et des vignettes restantes des au moins deux vignettes,
lorsqu'une première opération de glissement de direction sur l'image en relief en perspective est détectée, mettre à jour l'image en relief en perspective sur l'interface d'image en perspective tridimensionnelle et les vignettes restantes des au moins deux vignettes selon une direction de glissement de la première opération de glissement de direction ; ou,
lorsqu'une seconde opération de glissement de direction sur l'image en relief en perspective est détectée, régler l'interface d'image en perspective tridimensionnelle en prenant une position d'une vignette adjacente de l'image agrandie comme référence ;
dans lequel une image en relief en perspective sur l'interface d'image en perspective tridimensionnelle réglée est une image agrandie de la vignette adjacente.

4. Procédé selon la revendication 1 ou 2, dans lequel le procédé comprend en outre : après l'étape d'affichage d'une interface d'image en perspective tridimensionnelle comprenant une image agrandie de la première vignette et des vignettes restantes des au moins deux vignettes, lorsqu'une opération de rétrécissement sur l'image en relief en perspective est détectée, afficher (403) l'interface de vignette ;
lorsqu'une troisième opération tactile sur l'interface de vignette est détectée, afficher (404) au moins une image de dossier dans une zone prédéfinie de l'interface de vignette ;
lorsqu'une opération de glissement consistant à faire glisser une vignette cible affichée sur l'interface de vignette vers une image de dossier cible est détectée, faire glisser (405) la vignette cible dans un dossier correspondant à l'image de dossier cible.

5. Procédé selon la revendication 4, dans lequel l'étape consistant en la détection d'une opération de glissement consistant à faire glisser une vignette cible affichée sur l'interface de vignette vers une image de dossier cible, faire glisser la vignette cible dans un dossier correspondant à l'image de dossier cible, comprend :
lorsque l'opération de glissement consistant à faire glisser la vignette cible affichée sur l'interface de vignette vers l'image de dossier cible est détectée, régler l'image de dossier cible à une image en perspective tridimensionnelle agrandie, agrandir une limite correspondant à l'image de dossier cible dans la zone prédéfinie et faire glisser la vignette cible dans le dossier correspondant à l'image de dossier cible.

6. Procédé selon la revendication 5, dans lequel le procédé comprend en outre : après l'étape consistant à régler l'image de dossier cible à une image en perspective tridimensionnelle agrandie, agrandir une limite correspondant à l'image de dossier cible dans la zone prédéfinie et faire glisser la vignette cible dans le dossier correspondant à l'image de dossier cible, restaurer la limite de l'image de dossier cible et de la zone prédéfinie, et masquer l'image de dossier dans la zone prédéfinie.

7. Terminal mobile (1200), comprenant :
un premier module d'affichage d'interface de vignette (1201) configuré pour afficher une interface de vignette comprenant au moins deux vignettes ; dans lequel l'interface de vignette est une interface d'image en perspective bidimensionnelle ;
dans lequel le terminal mobile (1200) est **caractérisé en ce qu'**il comprend en outre : un module d'affichage d'interface d'image en perspective tridimensionnelle (1202) configuré pour, lorsqu'une première opération tactile sur une première vignette dans les au moins deux vignettes est détectée, afficher une interface d'image en perspective tridimensionnelle comprenant une image agrandie de la première vignette et des vignettes restantes des au moins deux vignettes ;
dans lequel l'interface d'image en perspective tridimensionnelle est une image avec un effet de perspective tridimensionnelle affichée sur un écran d'affichage bidimensionnel ou une interface d'image en perspective tridimensionnelle affichée sur un écran d'affichage tridimensionnel ;
dans lequel l'image agrandie est une image en relief en perspective sur l'interface d'image en perspective tridimensionnelle et une hauteur en relief en perspective de chaque zone de l'image en relief en perspective est cohérente ; la relation de position entre les vignettes restantes des au moins deux vignettes et l'image agrandie sur l'interface d'image en perspective tridimensionnelle est la même que la relation de position dans l'interface de vignette ; la vignette la plus proche de l'image en relief en perspective a une hauteur en relief en perspective plus élevée sur l'interface d'image en perspective tridimensionnelle.

8. Terminal mobile (1200) selon la revendication 7, dans lequel, dans l'interface d'image en perspective tridimensionnelle, une taille de chacune des vignettes restantes des au moins deux vignettes est progressivement réduite dans une direction s'éloignant de l'image en relief en perspective, et une hauteur en relief en perspective de chacune des vignettes restantes des au moins deux vignettes est progressivement réduite dans la direction s'éloignant de l'image en relief en perspective.

9. Terminal mobile (1200) selon la revendication 7 ou 8, dans lequel le terminal mobile (1200) comprend de plus :
un premier module de réglage (1203) configuré pour, lorsqu'une deuxième opération tactile sur une seconde vignette plutôt que sur l'image en relief en perspective sur l'interface d'image en perspective tridimensionnelle est détectée, régler l'interface d'image en perspective tridimensionnelle en prenant une position de la seconde vignette comme référence ;
dans lequel une image en relief en perspective sur l'interface d'image en perspective tridimensionnelle réglée est une image agrandie de la seconde vignette ; ou,
dans lequel le terminal mobile (1200) comprend de plus :
un module de mise à jour (1204) configuré pour, lorsqu'une première opération de glissement de direction sur l'image en relief en perspective est détectée, mettre à jour l'image en relief en perspective sur l'interface d'image en perspective tridimensionnelle et les vignettes restantes des au moins deux vignettes selon une direction de glissement de la première opération de glissement de direction ; ou,
un second module de réglage (1205) configuré pour, lorsqu'une seconde opération de glissement de direction sur l'image en relief en perspective est détectée, régler l'interface d'image en perspective tridimensionnelle en prenant une position d'une vignette adjacente de l'image agrandie comme référence ;
dans lequel l'image en relief en perspective sur l'interface d'image en perspective tridimensionnelle réglée est une image agrandie de la vignette adjacente.

10. Terminal mobile (1200) selon la revendication 7 ou 8, dans lequel le terminal mobile (1200) comprend de plus :
un second module d'affichage (1206) d'interface de vignette configuré pour, lorsqu'une opération de rétrécissement sur l'image en relief en perspective est détectée, afficher l'interface de vignette ;
un module d'affichage (1207) d'image de dossier configuré pour, lorsqu'une troisième opération tactile sur l'interface de vignette est détectée, afficher au moins une image de dossier dans une zone prédéfinie de l'interface de vignette ;
un module de glissement (1208) configuré pour, lorsqu'une opération de glissement consistant à faire glisser une vignette cible affichée sur l'interface de vignette vers une image de dossier cible est détectée, faire glisser la vignette cible dans un dossier correspondant à l'image de dossier cible.

11. Terminal mobile (1200) selon la revendication 10, dans lequel le module de glissement (1208) est configuré pour, lorsque l'opération de glissement consistant à faire glisser la vignette cible affichée sur l'interface de vignette vers l'image de dossier cible est détectée, régler l'image de dossier cible à une image en perspective tridimensionnelle agrandie, agrandir une limite correspondant à l'image de dossier cible dans la zone prédéfinie et faire glisser la vignette cible dans le dossier correspondant à l'image de dossier cible.

12. Terminal mobile (1200) selon la revendication 11, dans lequel le terminal mobile (1200) comprend de plus : un module de restauration et de masquage (1209) configuré pour restaurer la limite de l'image de dossier cible et de la zone prédéfinie, et masquer l'image du dossier dans la zone prédéfinie.

13. Procédé selon la revendication 1, dans lequel la première vignette est une vidéo ; et l'image en relief en perspective sur l'interface d'image en perspective tridimensionnelle est une vidéo agrandie dans un état de lecture de la première vignette.

14. Procédé selon la revendication 13, dans lequel les vignettes restantes des au moins deux vignettes sont des vidéos ; et les vignettes restantes des au moins deux vignettes sur l'interface d'image en perspective tridimensionnelle sont des vidéos en état de pause.

15. Procédé selon la revendication 13, dans lequel les vignettes restantes des au moins deux vignettes, à l'exception de la première vignette, sont des vidéos ; les vignettes restantes des au moins deux vignettes sur l'interface d'image en perspective tridimensionnelle sont des vidéos en état de lecture ;
le procédé inclut en outre :
commander un terminal mobile pour ne produire que le son de l'image en relief en perspective.
